**Europäisches Patentamt**

**European Patent Office**

**Office européen des brevets**

(19)

(11) Veröffentlichungsnummer: **0 145 886**
**B1**

(12)
# EUROPÄISCHE PATENTSCHRIFT

(45) Veröffentlichungstag der Patentschrift:
26.08.87

(51) Int. Cl.⁴: **F 16 B 15/04**

(21) Anmeldenummer: **84112533.9**

(22) Anmeldetag: **17.10.84**

(54) Spreiznagel.

(30) Priorität: **15.12.83 DE 3345331**
**08.02.84 DE 3404306**

(43) Veröffentlichungstag der Anmeldung:
**26.06.85 Patentblatt 85/26**

(45) Bekanntmachung des Hinweises auf die Patenterteilung:
**26.08.87 Patentblatt 87/35**

(84) Benannte Vertragsstaaten:
**AT BE CH FR GB IT LI NL SE**

(56) Entgegenhaltungen:
**DE - A - 2 451 298**
**DE - A - 2 811 640**
**DE - A - 2 823 372**
**US - A - 4 050 344**

(73) Patentinhaber: **fischer-werke Artur Fischer GmbH & Co.
KG, Weinhalde 14-18,
D-7244 Tumlingen/Waldachtal 3 (DE)**

(72) Erfinder: **Fischer, Artur, Dr. h. c., Weinhalde 34,
D-7244 Waldachtal 3/Tumlingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Spreiznagel bestehend aus einem an einem Ende mit Mitteln zum Befestigen von Gegenständen und am anderen Ende mit einer Spitze versehenen Schaft, der durch einen in einen geschlitzten Bereich eingreifenden Spreizkörper spreizbar ist, wobei die Schlitzung die Form einer Aufspaltung aufweist.

Aus der US-A-4 050 344 ist ein Spreiznagel bekannt, der durch Einschlagen eines Spreizstiftes in eine sich verengende Bohrung aufspreizbar ist. Zur Befestigung eines Gegenstandes muss zunächst der Spreiznagel in das vorbereitete Bohrloch eingetrieben werden. Danach wird der Spreizstift in die Längsbohrung des Spreiznagels eingesetzt und ebenfalls mit Hammerschlägen in die sich verengende Längsbohrung des Spreiznagels eingeschlagen. Die Aufspreizung des Spreiznagels erfordert einen sehr stabilen nicht verformbaren Spreizstift aus Metall. Damit stellt sich unabhängig von der Beschaffenheit des Verankerungsgrundes und den Bohrlochtoleranzen stets das gleiche Aufspreizmass ein, das aus Funktionsgründen auf ein enges Bohrloch und einen harten Baustoff abgestimmt sein muss. Damit sind in weichen Baustoffen oder in grösser gebohrten Bohrlöchern nur geringe Haltewerte erreichbar. Da der Spreiznagel ferner auch kein Nachspreizvermögen aufweist, kann dies bei einer Bohrlocherweiterung durch Rissbildung unter Umständen zu einem Versagen der Verankerung führen.

Aus der DE-A-2 451 298 ist ein weiterer Spreiznagel bekannt, dessen Verankerung in der Weise erfolgt, dass durch Einschlagen des Spreiznagels in ein vorgebohrtes Bohrloch ein am Bohrlochgrund aufsitzender Spreizkörper in die Aufschlitzung des Spreiznagels eindringt. Dadurch werden die Schenkel des Spreiznagels aufgekeilt und gegen die Bohrlochwandung gepresst. Diese Art der Verankerung setzt eine Sacklochbohrung mit einer genau eingehaltenen, auf den Spreiznagel abgestimmten Tiefe voraus. Da der Spreizkörper einen in Zugrichtung sich verjüngenden Spreizkonus aufweist, besteht bei diesem Verankerungsprinzip die Gefahr, dass schon bei geringen Lasten der Spreiznagel vom Spreizkörper abgezogen und die Verkeilung damit aufgehoben wird. Ferner weist auch dieser Spreiznagel kein Nachspreizvermögen auf, so dass er für solche Montagen ebenfalls wenig geeignet ist, bei denen mit Rissbildung im Verankerungsgrund zu rechnen ist.

Der Erfindung liegt die Aufgabe zugrunde, einen Spreiznagel zu schaffen, der einfach herstell- und montierbar ist, und der in der Lage ist, bei sich erweiterndem Bohrloch nachzuspreizen.

Erfindungsgemäss wird dies dadurch erreicht, dass in der Aufspaltung eine plastisch und/oder elastisch verformbare, im Bereich der Ausspaltung den Schaft des Spreiznagels verdickende Einlage eingesetzt ist.

Durch die den Schaft des Spreiznagels verdickende Einlage erhält dieser ein Übermass gegenüber dem vorgebohrten Bohrloch. Beim Eintreiben des Spreiznagels in das Bohrloch wird durch den auf die Spreizschenkel wirkenden Druck die Einlage soweit zusammengepresst, dass durch kräftige Schläge der Spreiznagel in das Bohrloch eintreibbar ist. Durch die plastische und/oder elastische Verformbarkeit der Einlage werden dabei Bohrlochtoleranzen ausgeglichen. Nach dem Eintreiben werden die Spreizschenkel des Spreiznagels durch die plastische und/oder elastische Rückstellkraft der Einlage gegen die Bohrlochwandung gepresst und damit die zur Befestigung eines Gegenstandes notwendige Verankerung erreicht. Aufgrund dieser Rückstellkraft bleibt die Vespannung auch dann erhalten, wenn durch Rissbildung eine Bohrlocherweiterung eintritt. Da der Bohrlochgrund zur Aufspreizung nicht erforderlich ist, ist der Spreiznagel auch für durchgehende und in der Tiefe nicht begrenzte Bohrungen geeignet.

In einer weiteren Ausgestaltung der Erfindung kann die Aufspaltung mit sich verjüngenden Endbereichen ausgestattet, und die Einlage der Form der Aufspaltung angepasst sein. Mit dieser Gestaltung ergibt sich eine für das Eintreiben des Spreiznagels günstige, anpassungsfähige Aussenform.

In einer weiteren Ausgestaltung der Erfindung kann die Einlage aus Kunststoff bestehen und quer zur Längsrichtung einen ellipsenförmigen Querschnitt aufweisen. Durch die Ellipsenform der Einlage ergeben sich bei mittiger Abstützung der Spreizschenkel des Spreiznagels Freiräume im Randbereich der Aufspaltung, die das beim Eintreiben des Spreiznagels verdrängte Material der Einlage aufnehmen können.

In weiterer Gestaltung der Erfindung kann die Einlage zumindest über einen Teil ihrer Länge mit an der Aussenfläche des Nagels anliegenden Führungsstegen versehen sein. Diese Führungsstege dienen zur Arretierung und Halterung der Einlage in der Auspaltung.

Schliesslich kann in weiterer Ergänzung der Erfindung die Einlage aus Federblech bestehen und wellenförmig ausgebildet sein. Insbesondere bei grösseren Durchmessern des Spriznagels sind wellenförmig ausgebildete Stahlblecheinlagen wegen der sehr hohen Formelastizität zweckmässig.

In einer weiteren Gestaltung der Erfindung kann die Aufspaltung beidseitig jeweils eine V-förmige Längskerbe und die Einlage an ihren beiden Längsseiten eine den Längskerben angepasste Querschnittsverdickung aufweisen.

Durch die V-förmigen Längskerben der Aufspaltung ergibt sich eine Querschnittsvergrösserung der Aufspaltung, die es erlaubt, ohne wesentliche Schwächung der Spreizschenkel das Gesamtvolumen der zur Verankerung dienenden Einlage zu vergrössern. Die an die Längkerben angepasste Querschnittsverdickung der Einlage vergrössert insgesamt die wirksame Pressfläche einerseits und führt zu einer günstigeren radialen Druckverteilung andererseits. Da die beiden Längsseiten der Einlage ebenfalls an der Bohrlochwandung zur Anlage kommen, wird durch die beim Eintreiben des Spreiznagels auftretende Verformung der Einlage eine die gesamte Mantelfläche des Spreiznagels erfassende Verkeilung im Bohrloch erreicht. Dies führt zu sehr hohen Haltewerten, ohne gleichzeitig den Eintreibwiderstand zu erhöhen.

In einer weiteren Ausgestaltung der Erfindung kann die Einlage aus Kunststoff bestehen und quer zu ihrer Längsrichtung rippenartige Erhöhungen auf ihrer Unter- und Oberseite aufweisen. Durch die rippenartigen Erhöhungen wird der zur Verformung der Einlage notwendige Pressdruck und damit der Eintreibwiderstand soweit verringert, dass das Eintreiben des Spreiznagels auch in engen Bohrlöchern keine Schwierigkeiten bereitet. Der durch die Erhöhungen sich ergebende höhere Verformungsgrad der Einlage ermöglicht einen besseren Toleranzbereich der Bohrlöcher bei nur gering streuenden Haltewerten.

Schliesslich kann in einer weiteren Ergänzung der Erfindung in den die Aufspaltung begrenzenden Schenkelflächen Querrillen angeordnet sein. Die Breite der Einlage kann bezüglich des Bohrloches ein geringfügiges Übermass aufweisen, um auch die Längsseiten der Einlage bei der Verpressung im Bohrloch in die Verankerung einzubeziehen. Diese Massnahme kann jedoch beim Eintreiben des Spreiznagels in das Bohrloch dazu führen, dass die Einlage in Richtung des Aufspaltungsgrundes verschoben wird, so dass eine Stauchung und Beschädigung der Einlage eintritt. Durch die in den Schenkelflächen angeordenten Querrillen, in die Material der Einlage oder die rippenartigen Erhöhungen eingepresst werden, wird die Einlage in der Aufspaltung des Speiznagels festgehalten. Eine Verschiebung tritt somit nicht mehr ein.

In weiterer Ergänzung können die beiden V-förmigen Längskerben über das Ende der Aufspaltung hinaus in Richtung des Spreiznagelkopfes durch einen Auslauf verlängert sein. Mit diesem Auslauf wird erreicht, dass kein abrupter Übergang von dem durch die Aufspaltung geschwächten Teil des Spreiznagelschaftes zu dem ungeschlitzten Teil des Schaftes vorliegt. Die Vergrösserung des Übergangsbereiches verteilt die an dieser Stelle beim Eintreiben des Spreiznagels auftretende Spannungsspitze, die bei extremen Montagebedingungen unter Umständen zu einem Ausknicken der Spreizschenkel führen könnte.

In der Zeichnung sind Ausführungsbeispiele der Erfindung dargestellt.

Es zeigen:

Fig. 1 den Spreiznagel mit Einlage,

Fig. 2 einen als Abhänger ausgebildeten Spreiznagel mit einer in der Aufspaltung arretierten Einlage,

Fig. 3 einen Spreiznagel mit Gewindeanschluss und einer Federblecheinlage,

Fig. 4 die Befestigung eines Gegenstandes mit einem Spreiznagel,

Fig. 5 eine Variante des Spreiznagels mit Einlage,

Fig. 6 die Befestigung eines Gegenstandes mit dem Spreiznagel nach Fig. 5.

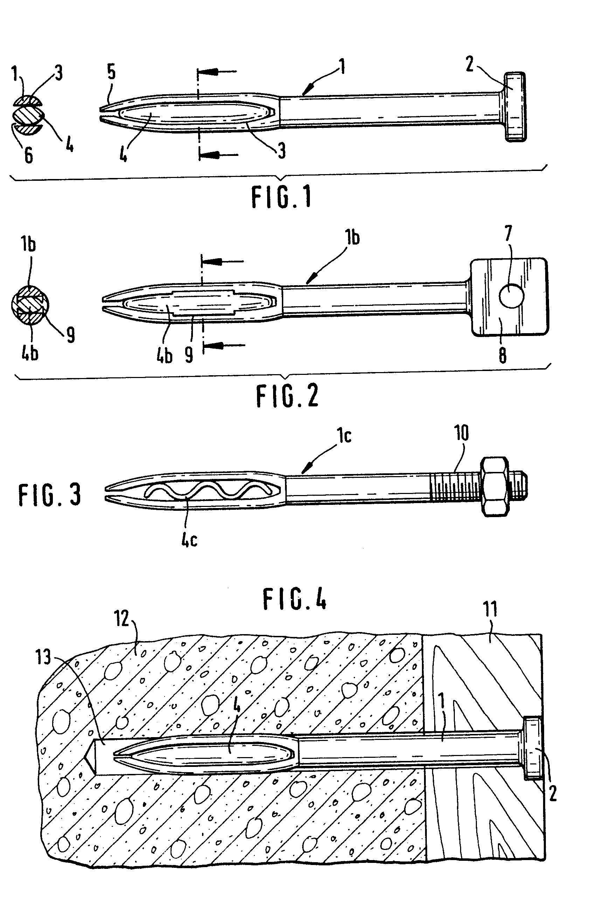

Der Spreiznagel 1 nach Fig. 1 ist mit einem Nagelkopf 2 zum Verspannen eines Gegenstandes an einem Mauerwerk versehen. Der Spreizbereich des Spreiznagels wird durch eine Aufspaltung 3 gebildet, in der eine vorzugsweise aus Kunststoff bestehende Einlage 4 eingesetzt ist. Die Aussenkontur des Spreizbereiches entspricht annähernd der Form der an ihren beiden Endbereichen sich verjüngenden Aufspaltung und der der Kontur der Aufspaltung angepassten Einlage 4. Damit ergibt sich mit der am Spreiznagel 1 vorgesehenen Spritze 5 eine das Eintreiben des Spreiznagels in das Bohrloch begünstigende Aussenform. Quer zur Längsrichtung weist die Einlage 4 einen ellipsenförmigen Querschnitt auf, so dass Freiräume 6 zur Aufnahme des nach dem Eintreiben verdrängten Materials der Einlage entstehen.

Der Spreiznagel 1b nach Figur 2 weist eine mit einer Bohrung 7 versehene Lasche 8 zum Einhängen eines Drahtes beispielsweise für die Abhängung von Rohren, Decken und dgl. auf. Die Eingabe 4b ist zur Halterung und Arretierung mit seitlich angeordneten Führungsstegen 9 versehen, die an der Aussenfläche des Spreiznagels 1b anliegen.

Bei dem mit einem Gewindeanschluss 10 ausgestatteten Spreiznagel 1c nach Fig. 3 wird die Einlage 4c durch ein wellenförmig gebogenes Federblech gestreckt. Durch die hohe Formelastizität ergibt sich ein sehr starker Pressdruck, der die Schenkel des Spreiznagels 1c gegen die Bohrlochwandung verkeilt.

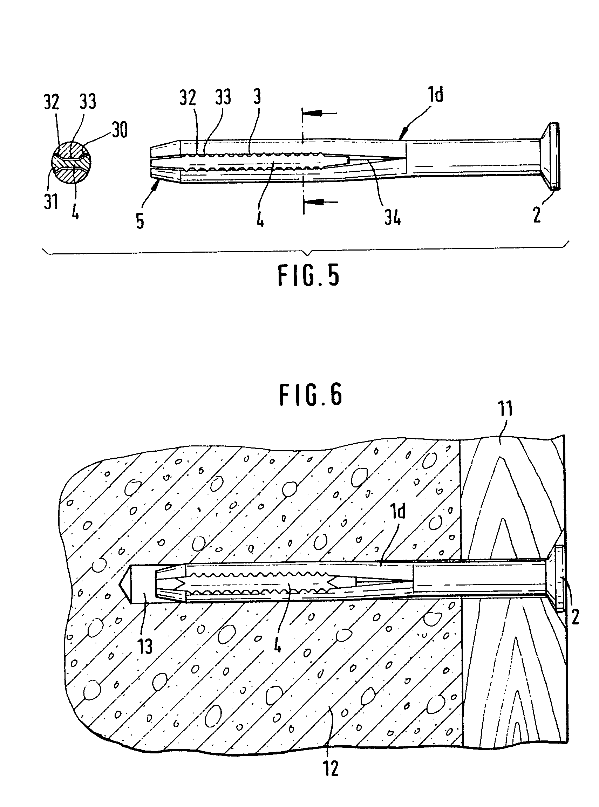

Zum Befestigen einer Holzlatte 11 an einem Mauerwerk 12 gemäss Fig. 4 wird durch die Holzlatte hindurch in das Mauerwerk ein dem Schaftdurchmesser des Spreiznagels entsprechendes Bohrloch 13 erstellt. Durch Hammerschläge auf den Nagelkopf 2 wird der Spreiznagel 1 soweit in das Bohrloch eingetrieben, bis der Nagelkopf 2 bündig mit der Latte 11 abschliesst. Durch die Verformung der Einlage 4 und der sich daraus ergebenden Rückstellkraft wird die zur Befestigung der Latte 11 notwendige Verankerung erreicht.

Der Spreiznagel 1d nach Fig. 5 weist an den beiden Längsseiten seiner Aufspaltung 3 jeweils eine V-förmige Längskerbe 30 auf, die durch eine der Längskerbe angepasste Querschnittsverdickung 31 der Einlage 4 ausgefüllt ist. Zur Verbesserung des Verformungsverhaltens der Einlage einerseits und zur Reduzierung des Pressdruckes andererseits weist die Unter- und Oberseite der Einlage 4 rippenartige, sich an den die Aufspaltung begrenzenden Schenkelflächen abstützende Erhöhungen 32 auf.

Um eine Verschiebung der Einlage 4 beim Einschlagen des Spreiznagels 1 in ein enges Bohrloch zu vermeiden, sind in den die Aufspaltung 3 begrenzenden Schenkelflächen Querrillen 33 eingebracht. Der Abstand der Querrillen 33 voneinander ist dem Abstand der rippenartigen Erhöhungen 32 der Einlage 4 so angepasst, dass die Spitzen der rippenartigen Erhöhungen 32 in diesen Querrillen 33 aufgenommen sind. Damit entsteht ein die axiale Verschiebung der Einlage verhindernder Formschluss. Die V-förmigen Längskerben 30 der Aufspaltung 3 setzen sich in Richtung Spreiznagelkopf 2 durch einen sich verjüngenden Auslauf 34 fort. Damit ist eine abrupte Querschnittsverminderung vom vollen Schaft des Spreiznagels zu den Spreizschenkeln vermieden.

Fig. 6 zeigt die Befestigung einer Holzlatte 11 an einem Mauerwerk 12 mit dem Spreiznagel 1d, wobei der Nagelkopf 2 bündig mit der Aussenfläche der Latte eingeschlagen ist.

**Patentansprüche**

1. Spreiznagel (1) bestehend aus einem an einem Ende mit Mitteln (2) zum Befestigen von Gegenständen (11) und am anderen Ende mit einer Spitze (5) versehenen Schaft, der durch einen in einen geschlitzten Bereich eingreifenden Spreizkörper spreizbar ist, wobei die Schlitzung die Form einer Aufspaltung (3) aufweist, dadurch gekennzeichnet, dass in der Aufspaltung (3) eine plastisch und/oder elastisch verformbare, im Bereich der Aufspaltung (3) den Schaft des Spreiznagels (1, 1b, 1c) verdickende Einlage (4, 4b, 4c) eingesetzt ist.

2. Spreiznagel nach Anspruch 1, dadurch gekennzeichnet, dass die Aufspaltung (3) mit sich verjüngenden Endbereichen ausgestattet, und die Einlage (4, 4b) der Form der Aufspaltung (3) angepasst ist.

3. Spreiznagel nach Anspruch 1, dadurch gekennzeichnet, dass die Einlage (4, 4b) aus Kunststoff besteht und quer zur Längsrichtung einen ellipsenförmigen Querschnitt aufweist.

4. Spreiznagel nach Anspruch 1, dadurch gekennzeichnet, dass die Einlage (4, 4b) zumindest über einen Teil ihrer Länge mit an der Aussenfläche des Nagels (4, 4b) anliegenden Führungsstegen (9) versehen ist.

5. Spreiznagel nach Anspruch 1, dadurch gekennzeichnet, dass die Einlage (4c) aus Federblech besteht und wellenförmig ausgebildet ist.

6. Spreiznagel nach Anspruch 1, dadurch gekennzeichnet, dass die Aufspaltung (3) beidseitig jeweils eine V-förmige Längskerbe (30) und die Einlage (4) an ihren beiden Längsseiten eine den Längskerben angepasste Querschnittsverdickung (31) aufweist.

7. Spreiznagel nach Anspruch 6, dadurch gekennzeichnet, dass die Einlage (4) aus Kunststoff besteht und quer zu ihrer Längsrichtung rippenartige Erhöhungen (32) auf ihrer Unter- und Oberseite aufweist.

8. Spreiznagel nach Anspruch 6, dadurch gekennzeichnet, dass in den die Aufspaltung (3) begrenzenden Schenkelflächen Querrillen (33) angeordnet sind.

9. Spreiznagel nach Anspruch 1, dadurch gekennzeichnet, dass die beiden V-förmigen Längskerben (30) über das Ende der Aufspaltung (3) hinaus in Richtung des Spreiznagelkopfes (2) durch einen Auslauf (34) verlängert sind.

## Claims

1. Expansion pin (1) comprising a shank which at one end is provided with means (2) for securing articles (11) and at the other end is provided with a point (5) and which can be expanded by means of an expansion element that engages in an apertured region, the aperture having the form of a slot (3), characterised in that there is inserted in the slot (3) a plastically and/or resiliently deformable insert (4, 4b, 4c) which thickens the shack of the expansion pin (1, 1b, 1c) in the region of the slot (3).

2. Expansion pin according to claim 1, characterised in that the slot (3) is provided with tapering end regions and that the insert (4, 4b) is matched to the shape of the slot (3).

3. Expansion pin according to claim 1, characterised in that the insert (4, 4b) consists of plastics and has an elliptical cross-section transverse to the longitudinal direction.

4. Expansion pin according to claim 1, characterised in that the insert (4, 4b) is provided at least over a part of its length with guide ribs (9) that rest against the outer surface of the pin (1, 1b).

5. Expansion pin according to claim 1, characterised in that the insert (4c) consists of spring sheet metal and is of corrugated construction.

6. Expansion pin according to claim 1, characterised in that the slot (3) has a V-shaped longitudinal notch (30) on each side and that the insert (4) has on each of its two longitudinal sides a portion of enlarged cross-section (31) matched to the longitudinal notches.

7. Expansion pin according to claim 6, characterised in that the insert (4) consists of plastics and has on its lower and upper sides rib-like projections (32) transverse to its longitudinal direction.

8. Expansion pin according to claim 6, characterised in that transverse grooves (33) are arranged in the surfaces of the limbs defining the slot (3).

9. Expansion pin according to claim 1, characterised in that the two V-shaped longitudinal notches (30) are extended beyond the end of the slot (3) in the direction towards the head (2) of the expansion pin by means of a tapered portion (34).

## Revendications

1. Clou expansible (1), composé d'une tige, qui comporte d'un côté un élément (2) de fixation d'objets (11) et de l'autre une pointe (5) et qui peut être dilatée grâce à un corps écarteur inséré dans une partie fendue, la fente ayant la forme d'une encoche (3) de séparation, clou caractérisé en ce qu'un prisonnier (4, 4b, 4c) déformable plastiquement et/ou élastiquement et qui grossit la tige du clou expansible (1, 1b, 1c) à l'emplacement de l'encoche (3), est encastré dans cette encoche (3).

2. Clou expansible selon la revendication 1, caractérisé en ce que l'encoche (3) comporte des extrémités qui se rétrécissent et en ce que le prisonnier (4) est adapté à la forme de cette encoche (3).

3. Clou expansible selon la revendication 1, caractérisé en ce que le prisonnier (4, 4b) est en matière plastique et a une section elliptique perpendiculairement à sa longueur.

4. Clou ou piton expansible selon la revendications 1, caractérisé en ce que le prisonnier (4, 4b) comporte sur au moins une partie de sa longueur des nervures (9) de guidage affleurant la surface extérieure du piton (1b).

5. Clou expansible selon la revendication 1, caractérisé en ce que le prisonnier (4c) est une lamelle métallique élastique ondulée.

6. Clou expansible selon la revendication 1, caractérisé en ce que l'encoche (3) présente de chaque côté une rainure longitudinale (30) en V et le prisonnier (4) présente sur ses deux grands côté un épaississement donnant une section plus grande (31) complémentaire de ces rainures.

4

7. Clou expansible selon la revendication 6, caractérisé en ce que le prisonnier (4) est en matière plastique et comporte sur le dessus et le dessous des protubérances (32) en forme de nervures, perpendiculaires à sa longeur.

8. Clou expansible selon la revendication 6, caractérisé en ce que des cannelures transversales (33) sont formées dans les surfaces des branches qui délimitent l'encoche (3).

9. Clou expansible selon la revendication 1, caractérisé en ce que les deux rainures longitudinales (30) en V sont prolongées vers la tête (2) du clou, au-delà de l'extrémité de l'encoche (3), par un passage de sortie (34).

FIG.1

FIG.2

FIG.3

FIG.4

**FIG.5**

**FIG.6**